# EUROPEAN PATENT APPLICATION

(11) **EP 4 378 990 A1**
(43) Date of publication of application: **05.06.2024**
(21) Application number: 23194768.0
(22) Date of filing: 01.09.2023
(51) Int. Cl.: C08L 9/00, B60C 1/00, C08L 47/00, C08K 3/36, C08L 15/00, C08L 7/00

(54) **RUBBER COMPOSITION FOR TIRE TREAD AND TIRE**

(30) Priority: 30.11.2022 JP 2022192171
(71) Applicant: Toyo Tire Corporation, Itami-shi, Hyogo 664-0847 (JP)
(72) Inventor: NISHIKAWA, Yuma, Itami-shi, Hyogo, 664-0847 (JP)
(74) Representative: Ricker, Mathias

(57) **Abstract**

A rubber composition for a tire tread according to an embodiment includes: 100 parts by mass of a diene rubber component containing 40 parts by mass or more of a butadiene rubber; 60 to 200 parts by mass of silica; and 20 to 60 parts by mass of a terpene-based resin having a β-pinene unit content of 40 mass% or more.

## Description

### BACKGROUND OF THE INVENTION

### 1. Field of the Invention

The present invention relates to a rubber composition for a tire tread and also to a tire using the same.

### 2. Description of Related Art

One of the performances required for tires is grip performance on wet road surfaces (i.e., wet grip performance). It is known that in order to improve wet grip performance, silica is incorporated as a filler, and also a resin is incorporated.

For example, JP2022-535725A discloses a rubber composition for a tire tread, including 100 parts of a rubber component containing a styrene butadiene rubber, a butadiene rubber, and a natural rubber, 100 to 150 parts of silica, 25 to 50 parts of two kinds of hydrocarbon resins having different glass transition temperatures, and 10 to 30 parts of a liquid plasticizer. According to the description in JP2022-535725A, this improves handling performance on dry road surfaces and wet grip performance.

JP2018-083932A discloses a rubber composition for a tread, which incorporates a specific butadiene rubber and a terpene-based resin, and further incorporates silica. According to the description in JP2018-083932A, this improves fuel efficiency, abrasion resistance, and wet grip performance.

### SUMMARY OF THE INVENTION

For tires that can run not only on wet road surfaces but also on snowy roads in winter, such as all-season tires, for example, low-temperature performance is also required along with wet grip performance. Low-temperature performance is the ability to maintain softness in a low-temperature environment of less than 0°C, for example, to allow for driving on snowy roads. When a butadiene rubber having a low glass transition temperature is incorporated to impart low-temperature performance, the glass transition temperature of the entire rubber composition decreases, leading to a tendency for wet grip performance to deteriorate. Meanwhile, in a rubber composition incorporating a butadiene rubber, when a resin is added to improve the wet grip performance, the glass transition temperature increases, leading to a tendency for low-temperature performance to deteriorate. Like this, low-temperature performance and wet grip performance are contradictory, and their simultaneous achievement is difficult.

JP2018-083932A describes combining a butadiene rubber and a terpene-based resin. However, JP2018-083932A nowhere describes that a rubber component containing 40 mass% or more of a butadiene rubber is combined with a β-pinene resin, and that this makes it possible to simultaneously achieve low-temperature performance and wet grip performance.

An object of some embodiments of the invention is to provide a rubber composition for a tire tread, which is capable of simultaneously achieving low-temperature performance and wet grip performance, and also a tire using the same.

The invention encompasses the following embodiments.
[1] A rubber composition for a tire tread, including: 100 parts by mass of a diene rubber component containing 40 parts by mass or more of a butadiene rubber; 60 to 200 parts by mass of silica; and 20 to 60 parts by mass of a terpene-based resin having a β-pinene unit content of 40 mass% or more.
[2] The rubber composition for a tire tread according to [1], in which 100 parts by mass of the diene rubber component contains 60 parts by mass or more of the butadiene rubber.
[3] A tire having a tread made using the rubber composition for a tire tread according to [1] or [2].

According to an embodiment of the invention, low-temperature performance and wet grip performance can be simultaneously achieved.

### DESCRIPTION OF EMBODIMENTS

A rubber composition for a tire tread (hereinafter also referred to as "rubber composition") according to this embodiment includes (A) a diene rubber component containing 40 mass% or more of a butadiene rubber, (B) silica, and (C) a terpene-based resin having a β-pinene unit content of 40 mass% or more.

Butadiene rubbers generally have low glass transition temperatures. As a result of increasing the proportion of such a butadiene rubber, which has a low glass transition temperature, low-temperature performance can be improved. Meanwhile, a terpene-based resin having a β-pinene unit content of 40 mass% or more has low compatibility with butadiene rubbers. Therefore, as a result of adding the terpene-based resin to a diene rubber component having an increased proportion of butadiene rubber, the diene rubber component and the terpene-based resin are phase-separated. As a result, while maintaining the excellent low-temperature performance given by the butadiene rubber, the improving effect on wet grip performance given by the terpene-based resin can be exhibited. Accordingly, low-temperature performance and wet grip performance can be simultaneously achieved.

### [(A) Diene Rubber Component]

In this embodiment, the diene rubber component contains a butadiene rubber (BR). A butadiene rubber is a polymer of 1,3-butadiene and is also referred to as polybutadiene. As the butadiene rubber, any of various butadiene rubbers generally used in tire rubber compositions can be used. The butadiene rubber may be a modified butadiene rubber whose terminal and/or backbone is modified, or may also be an unmodified butadiene rubber that is not modified.

In this embodiment, 100 parts by mass of the diene rubber component contains 40 parts by mass or more of a butadiene rubber. That is, 40 mass% or more of the diene rubber component is a butadiene rubber. As a result of increasing the proportion of butadiene rubber, the diene rubber component and the terpene-based resin are phase-separated, and low-temperature performance and wet grip performance can be simultaneously achieved. From the viewpoint of enhancing the simultaneous achievement effect, it is preferable that 100 parts by mass of the diene rubber component contains 60 parts by mass or more, more preferably 65 parts by mass or more, of a butadiene rubber. The diene rubber component may also be composed only of a butadiene rubber. The butadiene rubber content per 100 parts by mass of the diene rubber component may be 60 to 90 parts by mass, or 65 to 85 parts by mass.

In one embodiment, as the butadiene rubber, one having a glass transition temperature (Tg) of -90°C or less is preferably used. The glass transition temperature of the butadiene rubber may be -110°C to -90°C, or -110°C to -95°C.

As used herein, the glass transition temperature (Tg) is a value measured in accordance with JIS K7121:2012 by a differential scanning calorimetry (DSC) method at a temperature rise rate of 20°C/min (measurement temperature range: -150°C to 50°C).

In one embodiment, as the butadiene rubber, a high-cis butadiene rubber (high-cis BR) having a cis-1,4 bond content of 90 mass% or more is preferably used. The cis-1,4 bond content of high-cis BR is more preferably 96 mass% or more.

As the high-cis BR, a butadiene rubber polymerized using a neodymium (Nd)-based catalyst (Nd-BR) may be used. Nd-BR generally has fewer branches than a butadiene rubber polymerized using a cobalt (Co)-based catalyst (Co-BR) and has excellent cohesiveness during the kneading of a rubber composition (i.e., kneadability). Therefore, its use is advantageous in increasing the butadiene rubber content in the diene rubber component and increasing the loading of filler such as silica.

The neodymium-based catalyst may be neodymium alone, a compound of neodymium with other metals, or an organic compound containing neodymium. As specific examples of neodymium-based catalysts, NdCl₃, Et-NdCl₂, and the like can be mentioned. A butadiene rubber polymerized using a neodymium-based catalyst has a microstructure with a high cis content and a low vinyl content. For example, the microstructure of Nd-BR is preferably such that the cis-1,4 bond content is 96 mass% or more, and the vinyl group (1,2-vinyl bond) content is 1.0 mass% or less.

As used herein, the cis-1,4 bond content and the vinyl group content are values calculated from the integral ratio of the ¹H-NMR spectrum.

In one embodiment, along with the butadiene rubber described above, the diene rubber component may also contain additional diene rubbers. A diene rubber refers to a rubber with a repeating unit corresponding to a diene monomer having a conjugated double bond. Specific examples of additional diene rubbers include various diene rubbers commonly used in rubber compositions, such as natural rubbers (NR), synthetic isoprene rubbers (IR), styrene butadiene rubbers (SBR), nitrile rubbers (NBR), chloroprene rubbers (CR), styrene-isoprene copolymer rubbers, butadiene-isoprene copolymer rubbers, and styrene-isoprene-butadiene copolymer rubbers. The concept of these additional diene rubbers also encompasses those modified at the terminal or backbone as necessary and those modified to impart desired characteristics (e.g., modified NR).

A styrene butadiene rubber as an additional diene rubber may be solution-polymerized SBR (SSBR) or emulsion-polymerized SBR (ESBR). In addition, the styrene butadiene rubber may also be modified SBR, which has a functional group introduced into the terminal and/or backbone thereof and thus is modified with the functional group. As functional groups in modified SBR, those having an interaction (reactivity or affinity) with silanol groups on the silica surface can be mentioned, and those containing at least one heteroatom selected from the group consisting of an oxygen atom, a nitrogen atom, and a silicon atom can be mentioned. Specific examples of functional groups include at least one member selected from the group consisting of a hydroxy group, an aldehyde group, a carboxy group, an alkoxy group, an amino group, an imino group, an epoxy group, an amide group, and an alkoxysilyl group.

In one embodiment, 100 parts by mass of the diene rubber component may contain 40 to 90 parts by mass of a butadiene rubber and 10 to 60 parts by mass of at least one selected from the group consisting of a natural rubber, a synthetic isoprene rubber, and a styrene butadiene rubber. 100 parts by mass of the diene rubber component may contain 60 to 85 parts by mass (more preferably 65 to 80 parts by mass) of a butadiene rubber and 15 to 40 parts by mass (more preferably 20 to 35 parts by mass) of at least one selected from the group consisting of a natural rubber, a synthetic isoprene rubber, and a styrene butadiene rubber.

### [(B) Silica]

The rubber composition according to this embodiment incorporates silica as a filler. As silica, for example, wet silica and dry silica can be mentioned. Preferably, wet silica such as wet precipitated silica or wet gelled silica is used.

The nitrogen adsorption specific surface area (N₂SA) of silica is not particularly limited and may be, for example, 100 to 300 m²/g, 150 to 250 m²/g, or 160 to 220 m²/g. The nitrogen adsorption specific surface area of silica is a BET specific surface area measured in accordance with the BET Method described in JIS K6430:2008.

The silica content is 60 to 200 parts by mass per 100 parts by mass of the diene rubber component. When the silica content is 60 parts by mass or more, wet grip performance can be improved. The silica content per 100 parts by mass of the diene rubber component is preferably 80 to 180 parts by mass, and more preferably 90 to 160 parts by mass, or may also be 110 to 160 parts by mass.

The filler to be incorporated into the rubber composition may be silica alone, and it is also possible to incorporate carbon black together with silica. The filler preferably contains silica in a proportion of 80 mass% or more, more preferably 90 mass% or more. The carbon black content is not particularly limited and may be, per 100 parts by mass of the diene rubber component, 15 parts by mass or less, or 1 to 10 parts by mass.

Carbon black is not particularly limited, and known various species can be used. Specifically, SAF grade (N100s), ISAF grade (N200s), HAF grade (N300s), FEF grade (N500s), and GPF grade (N600s) (all ASTM grades) can be mentioned. Any one of these grades of carbon black can be used alone, and it is also possible to use a combination of two or more kinds.

### [(C) Terpene-Based Resin]

The rubber composition according to this embodiment incorporates a terpene-based resin having a β-pinene unit content of 40 mass% or more.

A terpene-based resin is a resin obtained by polymerizing a terpene compound such as α-pinene, β-pinene, limonene, or dipentene, and has a unit derived from a terpene compound. Examples of terpene-based resins include a polyterpene resin obtained by polymerizing a terpene compound alone, as well as modified terpene resins obtained by polymerizing a terpene compound and a monomer other than terpene. As modified terpene resins, for example, aromatic modified terpene resins obtained by polymerizing a terpene compound and an aromatic compound can be mentioned. The terpene-based resin is preferably a polyterpene resin having a β-pinene unit content of 40 mass% or more, and more preferably a pinene resin having a β-pinene unit content of 40 mass% or more.

A β-pinene unit content is the content of β-pinene units in 100 mass% of a terpene-based resin. A β-pinene unit is a unit derived from β-pinene. From the viewpoint of lowering the compatibility with butadiene rubbers and enhancing the effectiveness in simultaneously achieving low-temperature performance and wet grip performance, the β-pinene unit content in the terpene-based resin is preferably 60 mass% or more, more preferably 80 mass% or more, still more preferably 90 mass% or more, and yet more preferably 95 mass% or more, or may also be 100 mass%.

The α-pinene unit content in the terpene-based resin is 60 mass% or less, preferably 40 mass% or less, more preferably 20 mass% or less, still more preferably 10 mass% or less, and yet more preferably 5 mass% or less, or may also be 0 mass%. An α-pinene unit content is the content of α-pinene units in 100 mass% of a terpene-based resin. An α-pinene unit is a unit derived from α-pinene.

The softening point of the terpene-based resin is not particularly limited and may be, for example, 100°C to 150°C, or 110°C to 130°C. Here, the softening point is measured in accordance with ASTM D6090 (published in 1997).

The method for synthesizing a terpene-based resin is not particularly limited. For example, a terpene-based resin can be synthesized by cationically polymerizing a β-pinene-containing monomer using a Lewis acid catalyst. Specific examples of Lewis acid catalysts include, but are not particularly limited to, metal halides (e.g., BF₃, BBr₃, AlF₃, AlBr₃, TiCl₄, TiBr₄, FeCl₃, FeCl₂, SnCl₄, WCl₆, MoCls, ZrCl₄, SbCl₃, SbCl₅, TeCl₂, and ZnCl₂), metal alkyl compounds (e.g., Et₃Al, Et₂AlCl, EtAlCl₂, Et₃Al₂Cl₃, (iBu)₃Al, (iBu)₂AlCl, (iBu)AlCl₂, Me₄Sn, Et₄Sn, Bu₄Sn, and Bu₃SnCl), and metal alkoxy compounds (e.g., Al(OR)₃₋ₓClₓ and Ti(OR)_{4-y}Cl_{y} (wherein R represents an alkyl group or an aryl group, x represents an integer of 1 or 2, and y represents an integer of 1 to 3)). Here, Et represents an ethyl group, iBu represents an isobutyl group, Me represents a methyl group, and Bu represents a butyl group.

The terpene-based resin content is 20 to 60 parts by mass per 100 parts by mass of the diene rubber component. When the terpene-based resin content is 20 parts by mass or more, wet grip performance can be improved. When the terpene-based resin content is 60 parts by mass or less, the deterioration of low-temperature performance can be suppressed. The terpene-based resin content per 100 parts by mass of the diene rubber component is preferably 25 parts by mass or more. In addition, the content is preferably less than 60 parts by mass, more preferably 50 parts by mass or less, and still more preferably 45 parts by mass or less, or may also be 40 parts by mass or less.

### [Other Components]

In addition to the above components, the rubber composition according to this embodiment may also incorporate various additives generally used in rubber compositions, such as silane coupling agents, oils, zinc oxide, stearic acid, antioxidants, waxes, vulcanizing agents, and vulcanization accelerators.

As silane coupling agents, for example, sulfide silane coupling agents such as bis(3-triethoxysilylpropyl)tetrasulfide, bis(3-triethoxysilylpropyl)disulfide, bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide, mercaptosilane coupling agents such as 3-mercaptopropyltrimethoxysilane, 3-mercaptopropyltriethoxysilane, 3-mercaptopropylmethyldimethoxysilane, 3-mercaptopropyldimethylmethoxysilane, and mercaptoethyltriethoxysilane, and thioester group-containing silane coupling agents such as 3-octanoylthio-1-propyltriethoxysilane, 3-propionylthiopropyltrimethoxysilane, 3-hexanoylthio-1-propyltriethoxysilane, and 3-octanoylthio-1-propyltrimethoxysilane can be mentioned. Any one of them can be used alone, and it is also possible to use a combination of two or more kinds.

The silane coupling agent content is not particularly limited, but is preferably 2 to 25 mass% of the amount of silica, that is, 2 to 25 parts by mass per 100 parts by mass of silica. The silane coupling agent content is more preferably 5 to 20 mass%, still more preferably 5 to 15 mass%, of the amount of silica.

The oil content is not particularly limited and may be, for example, per 100 parts by mass of the diene rubber component, 0 to 40 parts by mass, 5 to 38 parts by mass, 10 to 35 parts by mass, or 15 to 30 parts by mass.

The zinc oxide content is not particularly limited and may be, for example, per 100 parts by mass of the diene rubber component, 0 to 10 parts by mass, 0.5 to 5 parts by mass, or 1 to 4 parts by mass.

The stearic acid content is not particularly limited and may be, for example, per 100 parts by mass of the diene rubber component, 0 to 10 parts by mass, 0.5 to 5 parts by mass, or 1 to 4 parts by mass.

As antioxidants, for example, amine-ketone-based, aromatic secondary amine-based, monophenol-based, bisphenol-based, benzimidazole-based, and like various antioxidants can be mentioned. Any one of them can be used alone, and it is also possible to use a combination of two or more kinds. The antioxidant content is not particularly limited and may be, for example, per 100 parts by mass of the diene rubber component, 0 to 10 parts by mass, 0.5 to 5 parts by mass, or 1 to 4 parts by mass.

As a vulcanizing agent, sulfur is preferably used. The vulcanizing agent content is not particularly limited and may be, per 100 parts by mass of the diene rubber component, 0.1 to 10 parts by mass, 0.5 to 5 parts by mass, or 1 to 3 parts by mass.

As vulcanization accelerators, for example, sulfenamide-based, guanidine-based, thiuram-based, thiazole-based, and like various vulcanization accelerators can be mentioned. Any one of them can be used alone, and it is also possible to use a combination of two or more kinds. The vulcanization accelerator content is not particularly limited, but is, per 100 parts by mass of the diene rubber component, preferably 0.1 to 7 parts by mass, and more preferably 0.5 to 5 parts by mass, or may also be 1 to 3 parts by mass.

### [Rubber Composition Preparation Method]

The rubber composition according to this embodiment can be made by kneading in the usual manner using a commonly used mixer such as a Banbury mixer, a kneader, or a roll. That is, for example, in the first mixing stage (non-productive mixing step), additives other than a vulcanizing agent and a vulcanization accelerator are added to a diene rubber component together with silica and a terpene-based resin, and mixed. Next, in the final mixing stage (productive mix step), a vulcanizing agent and a vulcanization accelerator are added to the obtained mixture and mixed. As a result, an unvulcanized rubber composition can be prepared.

### [Application of Rubber Composition]

The rubber composition according to this embodiment can be used as a rubber composition for a tire tread. As tires, pneumatic tires of various sizes for various applications, including tires for passenger cars, heavy-duty tires for trucks and buses, and the like, can be mentioned.

As described above, the rubber composition according to this embodiment is capable of simultaneously achieving low-temperature performance and wet grip performance, and thus is advantageously used for a tread rubber that forms the contact patch of an all-season tire. All-season tires are tires that can be used year-round, from road surfaces in summer to snowy roads in winter, and are also referred to as all-weather tires.

A tire according to one embodiment is a tire having a tread made using the rubber composition described above. That is, the tire according to one embodiment is provided with a tread rubber made of the above rubber composition.

Some tire tread rubbers have a two-layer structure composed of a cap rubber and a base rubber, while others have a single-layer structure having the two integrated. In the case of a single-layer structure, the tread rubber may be formed from the above rubber composition. In the case of a two-layer structure, the cap rubber, which is on the outer side and contacts the road surface, may be formed from the above rubber composition, the base rubber disposed on the inner side of the cap rubber may be formed from the above rubber composition, or both the cap rubber and the base rubber may be formed from the above rubber composition.

The method for producing a tire is not particularly limited. For example, the above rubber composition is formed into a predetermined shape by extrusion in the usual manner to give an unvulcanized tread rubber member. The tread rubber member is combined with other tire members to make an unvulcanized tire (green tire). Subsequently, vulcanization molding is performed at 140°C to 180°C, for example, whereby a tire can be produced.

### EXAMPLES

Examples will be shown hereinafter, but the invention is not limited to these examples.

Components used in the examples and comparative examples are as follows.
- BR 1: Co-BR, Tg = -100°C, "BR 150B" manufactured by UBE Corporation
- BR 2: Nd-BR, Tg = -102°C, cis-1,4 bond content = 97 mass%, vinyl group content = 0.9 mass%, "BR 730" manufactured by JSR Corporation
- SBR 1: Modified SSBR, Tg = -60°C, styrene content: 10 mass%, microstructure of butadiene moiety; vinyl content: 42%, "HPR 840" manufactured by JSR Corporation
- SBR 2: Unmodified SSBR, Tg = -68°C, oil-extended product with 37.5 parts by mass of oil per 100 parts by mass of rubber content, "TUFDENE 1834" manufactured by Asahi Kasei Corporation
- SBR 3: Modified SSBR, Tg = -24°C, styrene content: 20.5 mass%, microstructure of butadiene moiety; vinyl content: 55.5%, "HPR 350" manufactured by JSR Corporation
- NR: RSS#3
- Carbon black: "SEAST 3" manufactured by Tokai Carbon Co., Ltd.
- Silica: "Ultrasil VN3" manufactured by Evonik Industries (N₂SA = 180 m²/g)
- Silane coupling agent 1: Bis(3-triethoxysilylpropyl)tetrasulfide, "Si69" manufactured by Evonik Industries
- Silane coupling agent 2: 3-Octanoylthio-1-propyltriethoxysilane, "NXT" manufactured by Momentive Performance Materials
- Oil: "PROCESS NC140" manufactured by ENEOS Corporation
- Zinc oxide: "Type 2 Zinc Oxide" manufactured by Mitsui Mining & Smelting Co., Ltd.
- Stearic acid: "LUNAC S-20" manufactured by Kao Corporation
- Antioxidant: "Antigen 6C" manufactured by Sumitomo Chemical Co., Ltd.
- Terpene-based resin 1: β-Pinene unit content = 100 mass%, softening point = 115°C, "DERCOLYTE S 115" manufactured by DRT
- Terpene-based resin 2: β-Pinene unit content = 98 mass% or more, softening point = 115°C, "Sylvatraxx 4150" manufactured by KRATON
- Terpene-based resin 3: α-Pinene unit content = 100 mass%, softening point = 115°C, "DERCOLYTE A 115" manufactured by DRT
- Hydrocarbon resin: Styrene-based monomer/aliphatic monomer copolymer resin, softening point = 110°C, "FTR6110" manufactured by Mitsui Chemicals, Inc.
- Sulfur: "Powder Sulfur" manufactured by Tsurumi Chemical Industry Co., Ltd.
- Vulcanization accelerator CBS: Sulfenamide-based, "NOCCELER CZ-G (CZ)" manufactured by Ouchi Shinko Chemical Industrial Co., Ltd.
- Vulcanization accelerator DPG: Guanidine-based, "NOCCELER D" manufactured by Ouchi Shinko Chemical Industrial Co., Ltd.

The evaluation methods in the examples and comparative examples are as follows.

### (1) Wet Grip Performance

Four prototype tires were mounted on a 2,000-cc 4WD vehicle and run on a road surface covered with water to a water depth of 2 to 3 mm. During running, the ABS was activated to slow the vehicle from 90 km/h to 20 km/h, and the braking distance at that time was measured (average of n = 10). The reciprocal of the braking distance was expressed as an index taking the value of Comparative Example 1 in Table 1, the value of Comparative Example 11 in Table 2, or the value of Comparative Example 21 in Table 3, as 100. The larger the index, the shorter the braking distance, indicating better wet grip performance.

### (2) Low-Temperature Performance

In accordance with JIS K6253:2012, the hardness at a temperature of -5°C was measured using a Type A durometer. The reciprocal of the hardness was expressed as an index taking the value of Comparative Example 1 in Table 1, the value of Comparative Example 11 in Table 2, or the value of Comparative Example 21 in Table 3, as 100. The larger the index, the higher the softness in a low-temperature environment (-5°C), indicating better low-temperature performance.

### [First Experiment Example]

Using a Banbury mixer, following the formulations (parts by mass) shown in Table 1 below, first, in the first mixing stage, ingredients excluding sulfur and a vulcanization accelerator were added to a diene rubber component and kneaded (discharge temperature = 160°C). Next, in the final mixing stage, sulfur and a vulcanization accelerator were added to the obtained kneaded product and kneaded (discharge temperature = 90°C), thereby preparing a rubber composition. Incidentally, with respect to the amount of SBR 2 in Table 1, the amount of rubber content is shown in parentheses, and the remainder is the oil amount.

The obtained unvulcanized rubber composition was vulcanized at 160°C for 20 minutes to make a test piece, and the low-temperature performance was evaluated. In addition, using the unvulcanized rubber composition as a tread rubber, vulcanization molding was performed in the usual manner to make a pneumatic radial tire (all-season tire, tire size: 215/45ZR17). The wet grip performance of the obtained prototype tire was evaluated.

**[Table 1]**

| | Comp. Ex. 1 | Comp. Ex. 2 | Comp. Ex. 3 | Comp. Ex. 4 | Ex. 1 | Ex. 2 | Ex. 3 | Ex. 4 |
|---|---|---|---|---|---|---|---|---|
| Formulation (parts by mass) | | | | | | | | |
| BR 1 | 40 | 40 | 40 | 40 | 40 | 40 | 40 | 40 |
| SBR 1 | 30 | 30 | 30 | 30 | 30 | 30 | 30 | 30 |
| SBR 2 | 41.25 (30) | 41.25 (30) | 41.25 (30) | 41.25 (30) | 41.25 (30) | 41.25 (30) | 41.25 (30) | 41.25 (30) |
| Carbon black | 10 | 10 | 10 | 10 | 10 | 10 | 10 | 10 |
| Silica | 65 | 65 | 65 | 65 | 65 | 65 | 65 | 65 |
| Silane coupling agent 1 | 6.5 | 6.5 | 6.5 | 6.5 | 6.5 | 6.5 | 6.5 | 6.5 |
| Oil | 5 | 5 | 5 | 5 | 5 | 5 | 5 | 5 |
| Zinc oxide | 2 | 2 | 2 | 2 | 2 | 2 | 2 | 2 |
| Stearic acid | 2 | 2 | 2 | 2 | 2 | 2 | 2 | 2 |
| Antioxidant | 2 | 2 | 2 | 2 | 2 | 2 | 2 | 2 |
| Terpene-based resin 1 | - | - | 5 | 65 | 20 | 30 | - | |
| Terpene-based resin 2 | - | - | - | - | - | - | 30 | 45 |
| Terpene-based resin 3 | 30 | - | - | - | - | - | - | - |
| Hydrocarbon resin | - | 30 | - | - | - | - | - | - |
| Sulfur | 2 | 2 | 2 | 2 | 2 | 2 | 2 | 2 |
| Vulcanization accelerator CBS | 1.5 | 1.5 | 1.5 | 1.5 | 1.5 | 1.5 | 1.5 | 1.5 |
| Vulcanization accelerator DPG | 0.5 | 0.5 | 0.5 | 0.5 | 0.5 | 0.5 | 0.5 | 0.5 |

| Evaluation (index) | | | | | | | | |
|---|---|---|---|---|---|---|---|---|
| Wet grip performance | 100 | 101 | 101 | 120 | 104 | 110 | 112 | 117 |
| Low-tem perature performance | 100 | 101 | 105 | 92 | 103 | 101 | 100 | 96 |

The results are as shown in Table 1. The first experiment example is a case where 40 mass% of the diene rubber component is a butadiene rubber. In Comparative Example 1, a terpene-based resin having a high α-pinene unit content was incorporated as the resin. In Comparative Example 1, the compatibility between the resin and butadiene rubber was high, and it was difficult to simultaneously achieve low-temperature performance and wet grip performance. In Comparative Example 2, a petroleum-based hydrocarbon resin was incorporated as the resin. Also in Comparative Example 2, the compatibility between the resin and butadiene rubber was high, and it was difficult to simultaneously achieve low-temperature performance and wet grip performance.

On the other hand, in Examples 1 to 4, because a terpene-based resin having a high β-pinene unit content was incorporated as the resin, the rubber component and resin were phase-separated. As a result, in Examples 1 to 4, compared to Comparative Example 1, the wet grip performance was improved while suppressing the deterioration of low-temperature performance. In Comparative Example 3, the amount of terpene-based resin incorporated was small, and the wet grip performance improving effect was insufficient. In Comparative Example 4, the amount of terpene-based resin incorporated was too large, and, compared to Comparative Example 1, the low-temperature performance deteriorated.

### [Second Experiment Example]

A rubber composition was prepared in the same manner as in the first experiment example, except for following the formulations (parts by mass) shown in Table 2 below. The wet grip performance and low-temperature performance of each obtained rubber composition were evaluated in the same manner as in the first experiment example. The results are as shown in Table 2.

**[Table 2]**

| | Comp. Ex. 11 | Comp. Ex. 12 | Comp. Ex. 13 | Comp. Ex. 14 | Ex. 11 | Ex. 12 | Ex. 13 | Ex. 14 |
|---|---|---|---|---|---|---|---|---|
| Formulation (parts by mass) | | | | | | | | |
| BR2 | 70 | 70 | 70 | 70 | 70 | 70 | 70 | 70 |
| SBR 3 | 20 | 20 | 20 | 20 | 20 | 20 | 20 | 20 |
| NR | 10 | 10 | 10 | 10 | 10 | 10 | 10 | 10 |
| Carbon black | 10 | 10 | 10 | 10 | 10 | 10 | 10 | 10 |
| Silica | 100 | 100 | 100 | 100 | 100 | 100 | 100 | 100 |
| Silane coupling agent 2 | 10 | 10 | 10 | 10 | 10 | 10 | 10 | 10 |
| Oil | 10 | 10 | 10 | 10 | 10 | 10 | 10 | 10 |
| Zinc oxide | 0 2 | 2 | 2 | 2 | 2 | 2 | 2 | 2 |
| Stearic acid | 2 | 2 | 2 | 2 | 2 | 2 | 2 | 2 |
| Antioxidant | 2 | 2 | 2 | 2 | 2 | 2 | 2 | 2 |
| Terpene-based resin 1 | - | - | 5 | 65 | 20 | 30 | - | - |
| Terpene-based esin 2 | - | - | - | - | - | - | 30 | 45 |
| Terpene-based resin 3 | 30 | - | - | - | - | - | - | - |
| Hydrocarbon resin | - | 30 | - | - | - | - | - | - |
| Sulfur | 2 | 2 | 2 | 2 | 2 | 2 | 2 | 2 |
| Vulcanization accelerator CBS | 1.5 | 1.5 | 1.5 | 1.5 | 1.5 | 1.5 | 1.5 | 1.5 |
| Vulcanization accelerator DPG | 0.5 | 0.5 | 0.5 | 0.5 | 0.5 | 0.5 | 0.5 | 0.5 |

| Evaluation (index) | | | | | | | | |
|---|---|---|---|---|---|---|---|---|
| Wet grip performance | 100 | 95 | 100 | 122 | 108 | 113 | 111 | 118 |
| Low-tem perature performance | 100 | 100 | 104 | 93 | 102 | 100 | 101 | 98 |

The second experiment example is a case where 70 mass% of the diene rubber component is a butadiene rubber. Also in the second experiment example, similarly to the first experiment example, in Examples 11 to 14 where a terpene-based resin having a high β-pinene unit content was incorporated, compared to Comparative Example 11 where a terpene-based resin having a high α-pinene unit content was incorporated, the wet grip performance was improved while suppressing the deterioration of low-temperature performance. In addition, in the second experiment example, because the proportion of butadiene rubber in the diene rubber component was higher than in the first experiment example, there was a tendency for the effectiveness in simultaneously achieving wet grip performance and low-temperature performance to be higher than in the first experiment example.

### [Third Experiment Example]

A rubber composition was prepared in the same manner as in the first experiment example, except for following the formulations (parts by mass) shown in Table 3 below. The wet grip performance and low-temperature performance of each obtained rubber composition were evaluated in the same manner as in the first experiment example. The results are as shown in Table 3.

**[Table 3]**

| | Comp. Ex. 21 | Comp. Ex. 22 | Comp. Ex. 23 | Comp. Ex. 24 | Ex. 21 | Ex. 22 | Ex. 23 | Ex. 24 |
|---|---|---|---|---|---|---|---|---|
| Formulation (parts by mass) | | | | | | | | |
| BR2 | 75 | 75 | 75 | 75 | 75 | 75 | 75 | 75 |
| SBR 1 | 15 5 | 15 | 15 | 15 | 15 | 15 | 15 | 15 10 |
| NR | 10 | 10 | 10 | 10 | 10 | 10 | 10 | 10 |
| Carbon black | 5 | 5 | 5 | 5 | 5 | 5 | 5 | 5 |
| Silica | 150 | 150 | 150 | 150 | 150 | 150 | 150 | 150 |
| Silane coupling agent 1 | 15 | 15 | 15 | 15 | 15 | 15 | 15 | 15 |
| Oil | 20 | 20 | 20 | 20 | 20 | 20 | 20 | 20 |
| Zinc oxide | 0 2 | 2 | 2 | 2 | 2 | 2 | 2 | 2 |
| Stearic acid | 2 | 2 | 2 | 2 | 2 | 2 | 2 | 2 |
| Antioxidant | 2 | 2 | 2 | 2 | 2 | 2 | 2 | 2 |
| Terpene-based resin 1 | - | - | 5 | 65 | 20 | 30 | - | - |
| Terpene-based resin 2 | - | - | - | - | - | - | 30 | 45 |
| Terpene-based resin 3 | 30 | - | - | - | - | - | - | - |
| Hydrocarbon resin | - | 30 | - | | - | - | - | - |
| Sulfur | 2 | 2 | 2 | 2 | 2 | | 2 | 2 |
| Vulcanization accelerator CBS | 1.5 | 1.5 | 1.5 | 1.5 | 1.5 | 1.5 | 1.5 | 1.5 |
| Vulcanization accelerator DPG | 0.5 | 0.5 | 0.5 | 0.5 | 0.5 | 0.5 | 0.5 | 0.5 |

| Evaluation (index) | | | | | | | | |
|---|---|---|---|---|---|---|---|---|
| Wet grip performance | 100 | 99 | 101 | 125 | 108 | 113 | 116 | 118 |
| Low-tem perature performance | 100 | 101 | 104 | 93 | 100 | 99 | 101 | 98 |

The third experiment example is a case where 75 mass% of the diene rubber component is a butadiene rubber. Also in the third experiment example, similarly to the first experiment example, in Examples 21 to 24 where a terpene-based resin having a high β-pinene unit content was incorporated, compared to Comparative Example 21 where a terpene-based resin having a high α-pinene unit content was incorporated, the wet grip performance was improved while suppressing the deterioration of low-temperature performance. In addition, in the third experiment example, because the proportion of butadiene rubber in the diene rubber component was higher than in the first experiment example, there was a tendency for the effectiveness in simultaneously achieving wet grip performance and low-temperature performance to be higher than in the first experiment example.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

## Claims

1. A rubber composition for a tire tread, comprising:
100 parts by mass of a diene rubber component containing 40 parts by mass or more of a butadiene rubber;
60 to 200 parts by mass of silica; and
20 to 60 parts by mass of a terpene-based resin having a β-pinene unit content of 40 mass% or more.

2. The rubber composition for a tire tread according to claim 1, wherein 100 parts by mass of the diene rubber component contains 60 parts by mass or more of the butadiene rubber.

3. The rubber composition for a tire tread according to claim 1, wherein 100 parts by mass of the diene rubber component contains 40 to 90 parts by mass of the butadiene rubber and 10 to 60 parts by mass of at least one selected from the group consisting of a natural rubber, a synthetic isoprene rubber, and a styrene butadiene rubber.

4. The rubber composition for a tire tread according to claim 1, wherein 100 parts by mass of the diene rubber component contains 60 to 85 parts by mass of the butadiene rubber and 15 to 40 parts by mass of at least one selected from the group consisting of a natural rubber, a synthetic isoprene rubber, and a styrene butadiene rubber.

5. The rubber composition for a tire tread according to any one of claims 1 to 4, wherein the butadiene rubber comprises a butadiene rubber having a cis-1,4 bond content of 96 mass% or more.

6. The rubber composition for a tire tread according to any one of claims 1 to 5, wherein the terpene-based resin has a β-pinene unit content of 80 mass% or more.

7. A tire having a tread made using the rubber composition for a tire tread according to any one of claims 1 to 6.

8. The tire according to claim 7, being an all-season tire.
